Europäisches Patentamt

European Patent Office

Office européen des brevets

(11) Publication number: **0 345 389**
**A1**

## EUROPEAN PATENT APPLICATION

(21) Application number: **88305202.9**

(22) Date of filing: **08.06.88**

(51) Int. Cl.4: **B60C 27/02 , B60C 27/16**

(43) Date of publication of application:
**13.12.89 Bulletin 89/50**

(84) Designated Contracting States:
**AT BE CH DE FR GB IT LI NL SE**

(71) Applicant: **Miller, Keith**
**122 Victoria Street**
**Shotton Colliery Co. Durham DH6 2QN(GB)**

Applicant: **Miller, Richard**
**122 Victoria Street**
**Shotton Colliery Co. Durham DH6 2QN(GB)**

(72) Inventor: **Miller, Keith**
**122 Victoria Street**
**Shotton Colliery Co. Durham DH6 2QN(GB)**
Inventor: **Miller, Richard**
**122 Victoria Street**
**Shotton Colliery Co. Durham DH6 2QN(GB)**

(74) Representative: **Virr, Dennis Austin et al**
**Urquhart-Dykes & Lord Floor B Milburn**
**House Dean Street**
**Newcastle upon Tyne NE1 1LE(GB)**

(54) **Appliance for improving tyre adhesion.**

(57) An appliance for improving tyre adhesion is a
unitary member, formed from a synthetic polymeric
material. The member comprises an elongated continuous first section (10), curved in the direction of
its length to form an arc of a circle, and sidewalls
(11, 12) extending from the sides of said section (10)
towards the centre of the arc, the elongated curved
section (10) and sidewalls (11, 12) together generally
resembling in dimensions a segment of a vehicle
tyre. A plurality of projections (16, 17), formed in-
tegral with said member, extend outwardly from the
curved section (10). A further plurality of projections
(18, 19), also formed integral with said member,
extend inwardly from the curved section (10) and
from the sidewalls (11, 12).

Fig. 2.

## Appliance for improving tyre adhesion.

The present invention is an appliance for improving the adhesion of vehicle tyres to the ground, in particular in conditions of mud, snow or ice or on a grass surface.

It is well known to provide chains or other devices for fitting upon a vehicle tyre for use in snow or ice. Such devices usually are fitted around the complete circumference of the tyre and require a certain amount of time for fitting. For this reason, they are usually left in position at least throughout a journey, often when the strict need for them is past.

Heavily studded such devices and chains may cause damage to the surface of the roadway. They suffer from the further disadvantage that they are usually relatively expensive, to the extent that they are seldom adopted by users except in countries or areas where snow or ice is likely to be encountered on a regular basis.

There is therefore an outstanding need for a device for improving tyre adhesion in a wide range of conditions, which device is of simple construction (and therefore more readily manufactured) and is easily fitted and removed as required. It is an object of the present invention to provide such a device.

The appliance according to the present invention for improving tyre adhesion comprises a unitary member, formed from a synthetic polymeric material, which member comprises an elongated continuous first section, curved in the direction of its longer dimension to form an arc of a circle, and sidewalls extending from the longer sides of said section in the general direction of the radial centre of said arc, said first section and sidewalls together generally resembling in dimensions a segment of a vehicle tyre, said curved first section having a plurality of projections, formed integral therewith and extending outwardly from the radially outer surface thereof, and said curved first section and said sidewalls each having a plurality of projections, formed integral therewith, extending from the inner surfaces thereof towards the inside space defined by said member.

The appliance of the present invention is a unitary member, as opposed to many of the prior art devices for improving tyre adhesion, and is formed from a synthetic polymeric material. Thus it is suitable for manufacture in a single-stage process, for example by vacuum forming or more preferably by injection moulding. A wide range of polymeric materials may be used in its manufacture. Thus the appliance may be formed of polythene, polypropylene or nylon, for example, or of glass-reinforced plastic. The preferred materials are those which are synthetic rubbers, for example the ABS resins. One particularly suitable material is the synthetic rubber product sold by Evode Limited under the trade mark "Evoprene"

The elongated continuous first section of the unitary member is curved in the direction of its length, the radius of curvature being substantially equal to, or only slightly greater than, that of the tyre to which it is intended to be fitted. Across its width, the first section may be substantially flat, although it may alternatively be slightly curved in that direction.

From the sides of the elongated, arcuate first section, the sidewalls extend towards the centre of the arc. The sidewalls may themselves be flat or generally so or they may be somewhat curved so that their free edges are inwardly inclined towards the sides of the tyre upon which the appliance is fitted.

In one much preferred form of the invention, a handle is provided upon or within one of the sidewalls, to enable the user to grip the appliance during fitting and removal of the appliance to and from a vehicle wheel. For example, one of the sidewalls may extend further than the other towards the centre of the arc of the curved first section, a hand hole preferably being provided in the extension. In another preferred form of the appliance, a handle, preferably with a hand hole, extends outwardly at an angle from the free edge of one of the sidewalls.

Formed integral with the curved first section of the appliance and extending outwardly from the radially outer surface of that section are a plurality of projections. It is these projections which engage the ground surface and afford the enhanced adhesion. Preferably the projections are distributed over an area which represents a major proportion of the outer surface of the curved first section of the appliance. Typically, the projections extend for from 3mm to 15mm from the surface, preferably 5mm to 10mm therefrom. In one preferred form of the appliance the projections comprise longer projections, say 10mm long, interspersed with shorter projections, say 5mm long. Preferably the projections in the regions of the ends of the surface, that is in the regions of the leading edge and trailing edge of the appliance when in use, are shorter than other projections lying in the area between those regions. All of these projections on the outer surface of the appliance are preferably tapered, for example conical or frustoconical.

On the inner surfaces of the curved section and sidewalls are a plurality of projections which assist the appliance in gripping the tyre to which it is to fitted. In general, these inner projections are shorter than those on the outer surface, preferably not exceeding 3 mm in length, for example between 1mm and 3mm in length. The inner projections are also preferably tapered and preferably are pointed. The projections on the inner surface of the curved first section are preferably distributed over a major proportion of that surface. The projections on the inside of the side walls may conveniently be more restricted in extent, for example being concentrated in the regions of the edges and ends of the sidewalls.

The invention will now be further described with reference to the accompanying drawings, wherein:-

Fig. 1 is an elevation from one side of one preferred embodiment of the appliance according to the invention;

Fig. 2 is a longitudinal sectional view on the line II-II of Fig. 3;

Fig. 3 is a transverse sectional view on the line III-III of Fig. 1; and

Fig. 4 is a plan view of the appliance of Figs. 1 to 3.

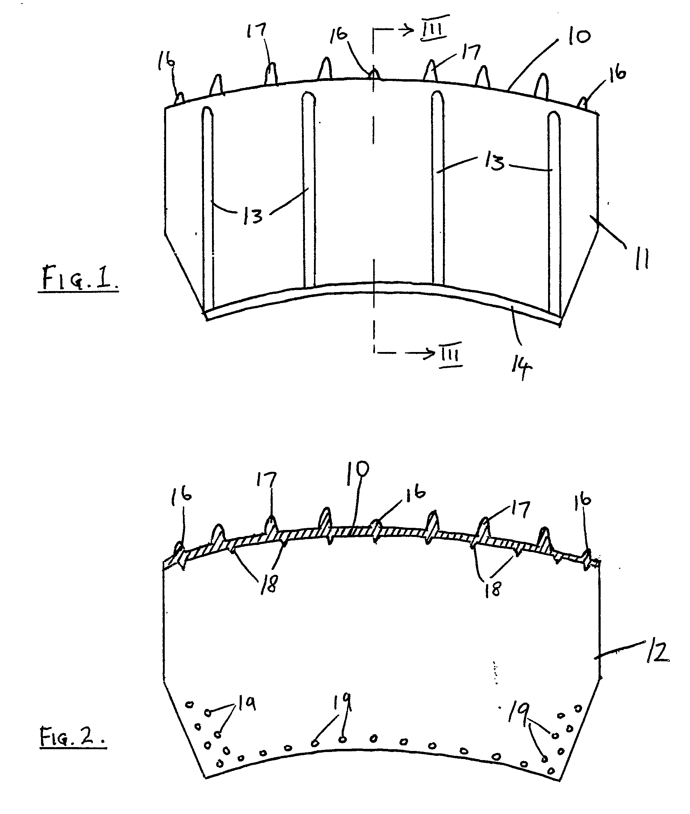

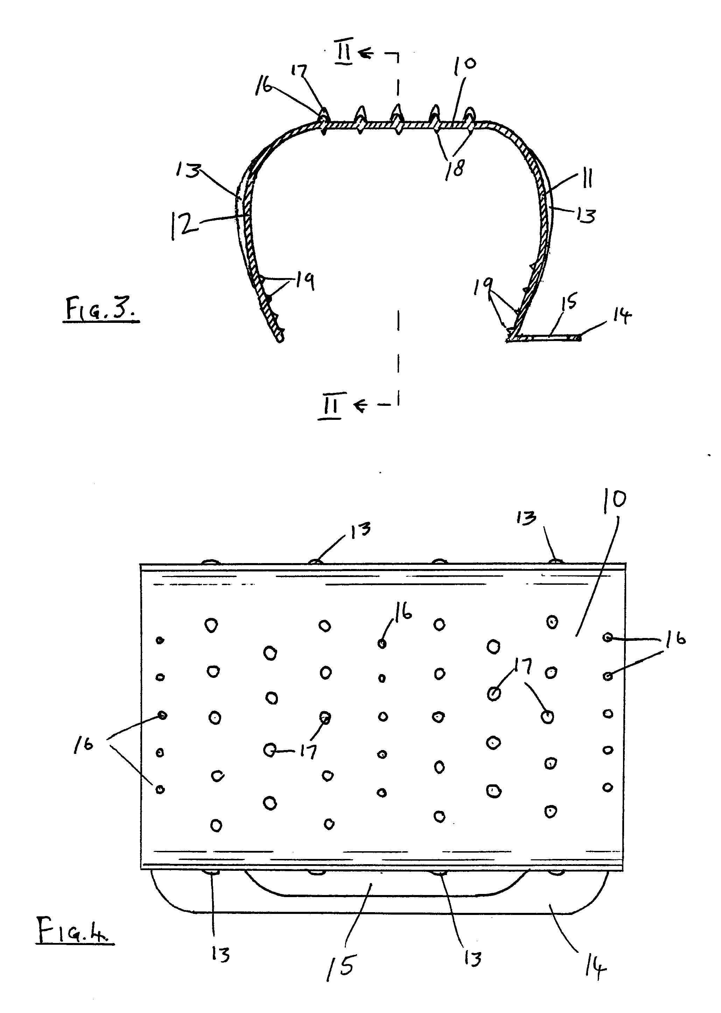

The illustrated appliance is a unitary member made from a synthetic plastics material, for example by injection moulding in an ABS resin. The member comprises an elongated first section 10, substantially flat across its width and curved along its length to form an arc of a circle of similar diameter to that of a motor vehicle tyre. Depending from the sides of the elongated section10 are two sidewalls 11, 12, which are formed as extensions of the section 10 towards the centre of its arc and which curve in somewhat towards each other at their lower edges, as seen in Fig. 3. The section 10 and sidewalls 11 and 12 together have a cross-section generally similar to that of a vehicle tyre and in side elevation (Fig. 1) appear as a segment of a circle.

The sidewalls are reinforced by ribs 13. Extending outwardly at an angle from the lower end of sidewall 11 is a flat handle 14 incorporating a hand hole 15.

On the outer surface of the arcuate section 10 are distributed a number of rounded conical projections 16, 17. The projections 16, which are those in the region of the ends of the section 10 and also in the central region of the section, are approximately 5mm high. The remainder of the projections, indentified by the numeral 17, are approximately 10mm high.

Upon the inner surface of the arcuate section 10 are a series of short, pointed projections 18, each approximately 2.5mm high. Similar pointed projections 19 are distributed as shown in the regions of the edges and ends of the inner surfaces of the sidewalls 11 and 12.

The illustrated appliance is used in a situation where a vehicle has becomes immobilised, or largely so, by slipping of the drive wheels on a ground surface such as snow or mud. An appliance is placed over the tyre of each of the drive wheels and the wheel is then driven slowly until the appliance engages and grips the ground. Ground-adhesion is derived from the projections 16 and 17. The appliances grip the respective tyres partly by virtue of the cross-sectional shape of the appliances but primarily via the projections 18 and 19.

The appliance according to the invention is readily fitted without the use of tools wherever and whenever it is needed and is subsequently removed with equal ease when the vehicle has been driven to a ground area where tyre grip is normal.

## Claims

1. An appliance for improving tyre adhesion, characterised in that it comprises a unitary member, formed from a synthetic polymeric material, which member comprises an elongated continuous first section (10), curved in the direction of its longer dimension to form an arc of a circle, and sidewalls (11, 12) extending from the longer sides of said section (10) in the general direction of the radial centre of said arc, said first section (10) and sidewalls (11, 12) together generally resembling in dimensions a segment of a vehicle tyre, said curved first section (10) having a plurality of projections (16, 17), formed integral therewith and extending outwardly from the radially outer surface thereof, and said curved first section (10) and said sidewalls (11, 12) each having a plurality of projections (18, 19), formed integral therewith, extending from the inner surfaces thereof towards the inside space defined by said member.

2. An appliance according to claim 1, characterised in that it is formed of polythene, polypropylene, nylon, a glass-reinforced plastic or a synthetic rubber.

3. An appliance according to claim 1 or claim 2, characterised in that said elongated section (10) is substantially flat across its width.

4. An appliance according to any of the preceding claims, characterised in that said sidewalls (11, 12) are inwardly curved.

5. An appliance according to any of the preceding claims, characterised in that a handle (14) is provided upon or within one of the sidewalls (11, 12).

6. An appliance according to claim 5, characterised in that said handle (14) extends outwardly at an angle from the free edge of one of the sidewalls (11, 12).

7. An appliance according to any of the preceding claims, characterised in that the projections (16, 17) extending from the outer surface of the elongated section (10) are tapered.

8. An appliance according to claim 7, characterised in that said outwardly-extending projections (16) are of shorter length in the regions of the ends of said elongated section (10).

9. An appliance according to any of the preceding claims, characterised in that the inwardly-extending projections (18, 19) are shorter than the outwardly-extending projections (16, 17).

10. An appliance according to any of the preceding claims, characterised in that the inwardly-extending projections (18, 19) are tapered and pointed.

Y93249A

Fig.1.

Fig.2.

893249A

Fig.3.

Fig.4.

European Patent
Office

**EUROPEAN SEARCH REPORT**

Application Number

EP 88 30 5202

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-4 447 437 (MAGEE) <br> * Claims; figures * <br> --- | 1-4,9, 10 | B 60 C 27/02 <br> B 60 C 27/16 |
| E | GB-A-2 198 397 (MILLER) <br> * Claims; figures * <br> --- | 1-5,7,9 ,10 | |
| X | US-A-2 530 108 (WHICHARD) <br> * Claims; figures * <br> --- | 1,3,4,9 | |
| A | US-A-4 098 313 (INGERSON) <br> * Claims; figures * <br> ----- | 1,3,4 | |

| | | |
|---|---|---|
| | | TECHNICAL FIELDS SEARCHED (Int. Cl.4) |
| | | B 60 C |

The present search report has been drawn up for all claims

| Place of search | Date of completion of the search | Examiner |
|---|---|---|
| THE HAGUE | 01-02-1989 | PIRIOU J.C. |